Europäisches Patentamt

European Patent Office

Office européen des brevets

(11) Veröffentlichungsnummer: **0 385 292 B1**

(12) **EUROPÄISCHE PATENTSCHRIFT**

(45) Veröffentlichungstag der Patentschrift: **15.06.94**

(51) Int. Cl.5: **C09D 5/44**

(21) Anmeldenummer: **90103537.8**

(22) Anmeldetag: **23.02.90**

(54) **Mittels kathodischer Elektrotauchlackierung mit einem zweiphasigen Überzug beschichtetes Substrat.**

(30) Priorität: **28.02.89 DE 3906145**

(43) Veröffentlichungstag der Anmeldung:
**05.09.90 Patentblatt 90/36**

(45) Bekanntmachung des Hinweises auf die
Patenterteilung:
**15.06.94 Patentblatt 94/24**

(84) Benannte Vertragsstaaten:
**AT BE CH DE ES FR GB IT LI NL SE**

(56) Entgegenhaltungen:
**EP-A- 0 261 385**
**GB-A- 2 141 127**

(73) Patentinhaber: **BASF Lacke + Farben AG
Glasuritstrasse 1
D-48165 Münster-Hiltrup(DE)**

(72) Erfinder: **Schwerzel, Thomas, Dr.
Auf der Hoehe 42
D-6701 Meckenheim(DE)**
Erfinder: **Schupp, Hans, Dr.
Jean-Voelker-Strasse 40
D-6520 Worms 1(DE)**
Erfinder: **Huemke, Klaus, Dr.
Gartenstrasse 24
D-6700 Ludwigshafen(DE)**
Erfinder: **Heimann, Ulrich, Dr.
Schlagholz 28
D-4400 Muenster(DE)**

(74) Vertreter: **Springer, Hans Jörg, Dr. et al
BASF Aktiengesellschaft,
Patentabteilung ZDX - C 6
D-67056 Ludwigshafen (DE)**

**Beschreibung**

Die vorliegende Erfindung betrifft ein mittels kathodischer Elektrotauchlackierung mit einem zweiphasigen Überzug beschichtetes Substrat, erhältlich durch Abscheiden einer Mischung zweier wäßriger kationischer Dispersionen, deren zugrundeliegende Polymere untereinander unverträglich sind, auf einem elektrisch leitfähigen Substrat und nachfolgendem Einbrennen.

Viele der heutzutage genutzten kathodischen Tauchlackier-Systeme bestehen zum einen aus einer Dispersion, die aus einer ionische Gruppen tragenden Mischung aus einem organischen Bindemittel und einem Vernetzer bestehen. Anstelle dieser Harzmischung kann natürlich auch ein selbstvernetzendes ionische Gruppen tragendes Harz verwendet werden. Die Bindemittel für die kathodische Elektrotauchlackierung sind meist stickstoffbasische Harze, die durch Protonieren mit Säure in dispergierbare Polymere überführt werden. Auch sind Sulfonium- oder Phosphoniumgruppen tragende Harze bekannt. Neben diesen basischen Eigenschaften muß das Harz noch über funktionelle Gruppen verfügen, die mit der Vernetzungskomponente reagieren können. Hier sind acide Wasserstoffatome wie z.B. NH- und OH-Gruppen, ungesättigte olefinische Doppelbindungen, Dienophile und Diene und weitere dem Fachmann bekannte Gruppen zu nennen. Die Herstellung der Harze kann durch Polymerisation oder Copolymerisation von ungesättigten Verbindungen, die zumindest teilweise basische Atome tragen, erfolgen. Häufig werden Polyadditionsverbindungen verwendet, die durch Umsetzen von Epoxidharzen mit gegenüber Oxirangruppen reaktiven Verbindungen hergestellt werden. Dabei werden basische Gruppen oftmals durch die Verwendung von primären, sekundären oder tertiären Aminen oder permanente Ladungen in der Form von quartären Ammoniumsalzen eingeführt. Weiterhin werden die so modifizierten Epoxidharze mit flexibilisierenden Verbindungen umgesetzt.

Auch ist der Zusatz von dispergierten Polymeren beschrieben. So beschreibt Moriarity in der EP-A-70 550 Dispersionen, die aus Umsetzungsprodukten von Polyepoxiden mit Polyoxyalkylenpolyaminen erhalten werden. Diese bewirken einen guten Verlauf und höhere Flexibilität der Lacke, sowie eine höhere Kraterresistenz. Die WO 86/05196 beschreibt ein Umsetzungsprodukt aus einem Polyoxyalkylenpolyamin mit einem Monoepoxid zur Verwendung in der kathodischen Elektrotauchlackierung.

Mc Intyre et al. beschreiben in der EP-A-253 404 eine Mischung aus einem kationischen Epoxid-Harz aus einem Reaktionsprodukt eines Polyoldiglycidylethers mit mindestens einem bifunktionellen Phenol und ggf. einem Verkappungsreagenz mit anschließender Umwandlung von einigen überschüssigen Oxirangruppen in kationische Gruppen und einem weiteren kathodischen Elektrotauchlackierharz auf Epoxid-Basis. Der Vorteil dieser Mischungen besteht darin, daß man gezielt die Schichtdicke der applizierten Lacke einstellen kann, besonders im Hinblick auf dickschichtige Systeme.

Allen Systemen des Standes der Technik ist gemein, daß die die Elastizität des Lackfilmes erhöhende Flexibilierungskomponente gleichzeitig auch die Glastemperatur des eingebrannten Lackfilmes erniedrigt. Das wirkt sich nachteilig auf die temperaturabhängigen Eigenschaften aus. So wird beispielsweise der Korrosionsschutz vor allem nach drastischem Klimawechseltest, wie z.B. dem Klimawechseltest nach VDA 621-415, der bei einer Maximaltemperatur von 40 °C oder den GM Scab-Test (Fisher Body Division TM 54-26) der bei einer Maximaltemperatur von 60 °C durchgeführt wird, stark beeinträchtigt.

Aufgabe der vorliegenden Erfindung war es, Überzüge zu entwickeln, die einen guten Korrosionsschutz in Klimawechseltests auch bei erhöhter Temperatur gewährleisten, die aber gleichzeitig eine hohe Elastizität aufweisen.

Die Aufgabe konnte gelöst werden durch Überzüge, die einen zweiphasigen Aufbau zeigen.

Gegenstand der vorliegenden Erfindung ist ein mittels kathodischer Elektrotauchlackierung mit einem zweiphasigen Überzug beschichtetes Substrat, erhältlich durch Abscheiden einer Mischung, enthaltend

A) 10-90 Gew.-% einer wäßrigen kationischen Dispersion eines Amino-Epoxidharzes mit einer Glasübergangstemperatur zwischen 20 und 100 °C, einem mittleren Molekulargewicht von 200 bis 20.000 und einer Aminzahl von 30 bis 150,

B) 10-50 Gew.-% einer wäßrigen kationischen Dispersion eines Aminoepoxidharzes, welches erhältlich ist durch Umsetzung eines primäre und/oder sekundäre Aminogruppen enthaltenden Copolymerisates auf Basis von Butadien und Acrylnitril mit einem Epoxidharz mit einem mittleren Molekulargewicht von 140 bis 10.000 und im Mittel 1,5 bis 3 Epoxidgruppen pro Molekül, wobei das Aminoepoxidharz eine Glasübergangstemperatur zwischen -80 und 20 °C aufweist, und wobei die den Dispersionen A) und B) zugrundeliegenden Polymeren untereinander unverträglichen sind und

c) 0 bis 50 Gew.-% eines Vernetzers, einer Pigmentpaste, Hilfs- und/oder Zusatzstoffe,

auf einem elektrisch leitfähigen Substrat und nachfolgendem Einbrennen.

Zu den Aufbaukomponenten ist folgendes auszuführen:

Als Komponente (A) ist eine wäßrige Dispersion eines Amino-Epoxidharzes geeignet. Diese Produkte können hydrophile Gruppen wie quartäre Ammoniumgruppen, Sulfonium- oder Phosphoniumgruppen aufweisen, wodurch sie wasserlöslich oder wasserdispergierbar sind. Vorteilhaft können aber auf diesem technischen Gebiet bekannte primäre und/oder sekundäre Hydroxylgruppen und primäre und/oder tertiäre Aminogruppen enthaltende Amino-Epoxidharze mit einer mittleren Molmasse von 200 bis 20 000 verwendet werden. Der Einsatz von Amino-Epoxidharzen wird für Grundierungen mit hohem Korrosionsschutzniveau bevorzugt. Die Aminoharze weisen Aminzahlen von 30 bis 150 auf. Die untere Grenze der Aminzahl sollte bei 35, bevorzugt 50, die obere Grenze sollte bei 120, bevorzugt bei 100, liegen. Beispiele für Amino-Epoxidharze sind Umsetzungsprodukte von epoxidgruppenhaltigen Harzen mit vorzugsweise endständigen Epoxidgruppen mit gesättigten und/oder ungesättigten sekundären und/oder primären Aminen bzw. Aminoalkoholen. Diese können am Alkylrest durch mindestens eine primäre und/oder sekundäre Hydroxylgruppen, durch die Mono- oder Dialkylaminogruppe und/oder durch eine primäre Aminogruppe, die durch Ketiminisierung vorübergehend geschützt wird, modifiziert sein.

Als Epoxidharze können beliebige Materialien verwendet werden, sofern sie ein mittleres Molekulargewicht von 300 bis 6000 und im Mittel 1,0 bis 3,0 Epoxidgruppen pro Molekül enthalten, vorzugsweise Verbindungen mit 2 Epoxidgruppen pro Molekül. Bevorzugt sind Epoxidharze mit mittleren Molekulargewichten von 350 bis 5000, insbesondere 350 bis 2000. Besonders bevorzugte Epoxidharze sind z.B. Glycidylether von im Mittel mindestens zwei phenolische Hydroxylgruppen im Molekül enthaltenden Polyphenolen, die sich in üblicher Weise durch Veretherung mit einem Epihalohydrin in Gegenwart von Alkali herstellen lassen. Aromatische Polyepoxide mit einem höheren Epoxidäquivalentgewicht können aus solchen mit einem niedrigen Epoxidäquivalentgewicht und Polyphenolen hergestellt werden oder aber durch geeignete Wahl des Verhältnisses von phenolische OH-Gruppen zu Epihalohydrin.

Das Einführen von Aminogruppen kann in einer der üblichen Reaktionen erfolgen, wie sie dem Fachmann geläufig sind und beispielsweise in EP 134 983, EP 165 556 oder EP 166 314 beschrieben sind.

Durch Einführen von zur Vernetzung befähigten Gruppen wie beispielsweise blockierte Isocyanate können die Aminoharze selbstvernetzend werden, was beispielsweise in US 4 692 503, US 3 935 087 oder der EP 2 73 247 beschrieben ist.

Die Glastemperaturen der Amin-Harze liegen zwischen 20 und 100°C, bevorzugt 20 und 80°C, besonders bevorzugt zwischen 25 und 45°C.

Die Aminoharze können durch Protonieren mit Säure in eine wasserlösliche oder wasserdispergierbare Form überführt werden. Als Säuren kommen Phosphorsäure, bevorzugt jedoch organische Säuren wie beispielsweise Ameisensäure, Essigsäure, Propionsäure oder Milchsäure in Betracht. Es ist auch möglich, daß Harz in ein wasser/Säure-Gemisch zu geben. Im allgemeinen verwendet man Dispersionen mit einem Feststoffgehalt von 20 bis 45 Gew.%, bevorzugt 30 bis 40 Gew.%.

Als Komponente (B) ist eine wäßrige Dispersion eines Amino-Epoxidharzes zu verwenden, wobei das der Dispersion zugrundeliegende Polymere eine Glasübergangstemperatur zwischen -80 und 20°C, bevorzugt zwischen -70 und 0°C, besonders bevorzugt zwischen -60 und -10°C aufweist und mit dem der Dispersion (A) zugrundeliegenden Polymeren unverträglich ist. Unverträglich bedeutet, daß sich eine Mischung der den Dispersionen (A) und (B) zugrundeliegenden Polymeren entmischt und zweiphasig vorliegt.

Geeignete Polyadditionsprodukte sind die Umsetzungsprodukte aus primäre und/oder sekundäre Aminogruppen enthaltenden Copolymerisaten auf Basis von Butadien und Acrylnitril mit Epoxidharzen. Es eignen sich Butadien-Acrylnitril-Copolymere mit Acrylnitrilgehalten von 5 bis 45 Gew.%, bevorzugt 10 bis 30 Gew.% und mit Butadiengehalten von 55 bis 95 Gew.%, bevorzugt 70 bis 90 Gew.%, die pro Molekül im Mittel 1,4 bis 3,0 primäre und/oder sekundäre Aminogruppen, sowie ggf. tertiäre Aminogruppen, enthalten. Das mittlere Molekulargewicht ($\overline{M}$n) des Copolymeren beträgt vorteilhaft 500 bis 15000, bevorzugt 2000 bis 8000.

Die aminogruppenhaltigen Copolymere lassen sich beispielsweise durch Umsetzung von Carboxylgruppen enthaltenden Butadien-Acrylnitril-Copolymeren mit Diaminen erhalten. Kommerziell erhältlich sind solche Copolymere, z.B. unter der Bezeichnung HYCAR® 1300 x ATBN und HYCAR 1300 x 16 ATBN (Fa. B. F. Goodrich), mit 10 Gew.% bzw. 16,5 Gew.% Acrylnitril.

Weiterhin kann man Aminogruppen enthaltende Butadien-Acrylnitril-Copolymere durch partielle Hydrierung von Butadien-Acrylnitril-Copolymeren herstellen oder durch Addition von primären Aminen an epoxidgruppenhaltigen Butadien-Acrylnitril-Copolymere.

Als Epoxidharze kommen nur solche in Betracht, die ein mittleres Molekulargewicht ($\overline{M}$n) von 140 bis 10 000 haben und im Mittel 1,5 bis 3 Epoxidgruppen, bevorzugt 2 Epoxidgruppen pro Molekül enthalten.

Bevorzugte Epoxidverbindungen sind Glycidylether von aliphatischen Diolen wie Butandiol oder Hexandiol oder Polyetherolen oder Glycidylether von im Mittel mindestens zwei phenolische Hydroxylgruppen enthaltenden Polyphenolen, die sich in üblicher Weise durch Veretherung mit einem Epihalohydrin in Gegenwart von Alkali herstellen lassen. Beispiele für geeignete Phenolverbindungen sind 2,2-Bis-(4-hydroxyphenyl)-propan (Bisphenol A), 4,4'-Dihydroxybenzophenon, 1,1-Bis(4-hydroxyphenyl)-ethan,1,1-Bis-(4-hydroxyphenyl)-isobutan, 2,2-Bis-(4-hydroxy-tert.-butyl-phenyl)-propan, Bis(2-hydroxynaphthyl)-methan und 1,5-Dihydroxynaphthalin. In manchen Fällen ist es wünschenswert, aromatische Epoxidharze mit höherem Molekulargewicht einzusetzen. Diese kann man erhalten, indem man die oben genannten Diglycidylether mit einem Polyphenol, beispielsweise 2,2-Bis-(4-hydroxyphenyl)-propan, reagieren läßt und dann die erhaltenen Produkte mit Epichlorhydrin unter Herstellung von Polyglycidylethern weiter einsetzt.

Das Gewichtsverhältnis des Butadien-Acrylnitril-Copolymeren zum Epoxidharz wird im allgemeinen so bemessen, daß pro Mol Epoxidgruppe des Epoxidharzes 1,05 bis 20 Mol, vorzugsweise 1,2 bis 4,0 Mol NH-Gruppen des Aminogruppen enthaltenden Butadien-Acrylnitril-Copolymers eingesetzt werden.

Die Umsetzung wird in der Regel so durchgeführt, daß man das Butadien-Acrylnitril-Copolymer mit einem Epoxidharz in einem organischen Lösungsmittel oder Lösungsmittelgemisch, welches sich sowohl Aminogruppen als auch Epoxidgruppen gegenüber inert verhält, bei Reaktionstemperaturen von 20 bis 150°C, vorzugsweise 50 bis 110°C, umsetzt. Die Reaktionszeiten können bis zu 20 Stunden betragen.

Die so erhaltenen polymeren Umsetzungsprodukte haben Aminzahlen von 20 bis 150 mg KOH/g Festsubstanz, vorzugsweise 40 bis 100 mg KOH/g Festsubstanz.

Durch Einführen von zur Vernetzung befähigten Gruppen wie beispielsweise blockierte Isocyanate können die Aminoharze selbstvernetzend werden, was beispielsweise in US 4 692 503, US 3 935 087 oder der EP 2 73 247 beschrieben ist.

Die Aminogruppen dieser Harze kann man ganz oder teilweise mit Säure neutralisieren und das protonierte Harz durch Zusatz von Wasser dispergieren. Als Säuren kommen Phosphorsäure, bevorzugt jedoch organische Säuren wie Ameisensäure, Essigsäure, Propionsäure oder Milchsäure in Betracht. Es ist auch möglich, das Harz in ein Wasser/Säure-Gemisch zu geben. Anschließend können die organischen Lösungsmittel abdestilliert werden.

Im allgemeinen verwendet man Dispersionen mit einem Feststoffgehalt von 5 bis 40 Gew.%, bevorzugt 15 bis 25 Gew.%.

Als Komponente (C) können übliche Vernetzer, Pigmentpaste, Hilfs- und/oder Zusatzstoffe mitverwendet werden.

Geeignete Vernetzer sind z.B. Aminoplastharze wie Harnstoff-, Formaldehyd-Harze, Melaminharze oder Benzoguanaminharze, geblockte Isocyanatvernetzer, über Esteraminolyse und/oder Umesterung härtende Vernetzer, z.B. ß-Hydroxyalkylester-Vernetzer gemäß der EP 40 867 und Carbalkoxymethylester-Vernetzer gemäß der DE 32 33 139. Weitere mögliche Vernetzer sind phenolische Mannich-Basen, wie sie z.B. in der DE 34 22 457 beschrieben sind.

Ist eine der Komponenten (A) oder (B) oder sind beide Komponenten selbstvernetzend, so kann die Mitverwendung eines Vernetzers entfallen.

Neben üblichen Pigmentpasten können auch Hilfs- und/oder Zusatzstoffe wie Lösemittel, Verlaufsmittel, Entschäumer oder Härtungskatalysatoren mitverwendet werden.

Die Komponenten (A), (B) oder (C) werden in folgendem Gewichtsverhältnis verwendet:

10 bis 90 Gew.%, bevorzugt 40 bis 75 Gew.% Komponente (A),

10 bis 50 Gew.%, bevorzugt 5 bis 20 Gew.% Komponente (B) und

0 bis 50 Gew.%, bei Mitverwendung bevorzugt 20 bis 40 Gew.% Komponente (C),

wobei sich die Gew.%-Angaben der Komponenten (A), (B) und (C) auf 100 Gew.% ergänzen.

Neben der Verwendung der Komponenten (A) und (B) als wäßrige kationische Dispersionen können auch deren Ausgangsharze zur Herstellung der Mischung verwendet werden, indem beispielsweise ein aminogruppenhaltiges Harz ganz oder teilweise mit Säure neutralisiert wird und das protonierte Harz durch Zusatz von Wasser dispergiert wird. In dieser Dispersion kann dann das zweite protonierte Harz dispergiert werden. Es ist aber auch möglich beide Harze zu protonieren und gemeinsam zu dispergieren. Als Säuren können die bei der Herstellung der kationischen Dispersionen (A) und (B) genannten Säuren verwendet werden.

Es ist auch möglich die Harze einzeln nacheinander oder gemeinsam in einem Säure/Wasser-Gemisch zu dispergieren.

Die Komponente (C) kann vor, während oder nach der Herstellung und Vereinigung der Komponenten (A) und (B) zugegeben werden.

Für die kathodische Elektrotauchlackierung wird im allgemeinen ein Feststoffgehalt des Elektrotauchbades von 5 bis 30 Gew.% eingestellt. Die Abscheidung erfolgt üblicherweise bei Temperaturen zwischen 15 und 40°C während einer Zeit von 0,5 bis 5 min und bei pH-Werten zwischen 4,0 und 8,5, bevorzugt um den Neutralpunkt, bei Spannungen zwischen 50 und 500 Volt. Der zu beschichtende elektrisch leitende Körper wird dabei als Kathode geschaltet. Der abgeschiedene Film wird bei Temperaturen oberhalb 100°C ca. 20 min gehärtet.

Die gehärteten Filme sind zweiphasig und weisen nach DSC-Messungen zwei Glasübergangstemperaturen auf. Die dem vernetzten Polymeren der Ausgangskomponente (A) zuordenbare Glasübergangstemperatur liegt in der Regel zwischen 50 und 150°C, bevorzugt zwischen 70 und 110°C, besonders bevorzugt zwischen 80 und 110°C. Die dem Polymeren der Ausgangskomponente (B) zuordenbare Glasübergangstemperatur liegt in der Regel zwischen -80 und +20°C, bevorzugt zwischen -70 und 0°C, besonders bevorzugt zwischen -60 und -10°C.

Der Vorteil dieser nach dem Einbrennen zwei Phasen bildenden Systemen liegt darin, daß die harte Polymermatrix, die für so wichtige Eigenschaften wie beispielsweise den Korrosionsschutz und die Schleifbarkeit verantwortlich ist, erhalten bleibt, andererseits durch die weiche Phase die Elastizität der Lacke deutlich verbessert wird.

Beispiele 1 bis 7

Herstellung der erfindungsgemäßen polymeren Umsetzungsprodukte

Allgemeine Vorschrift

In allen Beispielen wurde als Butadien-Acrylnitril-Komponente ein Copolymeres mit einem mittleren Molekulargewicht $\overline{M}n$ von 3500 - 3800 verwendet, das durch Reaktion von Aminoethylpiperazin mit Carboxylgruppenterminierten Butadien-Acrylnitril-Copolymeren mit einem Acrylnitrilgehalt von 16 Gew.% (Hycar 1300 x 16 ATBN) erhältlich ist.

In den Beispielen 1 bis 5 wurde als Epoxidharz ein Polytetrahydrofurandiglycidylether mit einem Epoxidequivalentgewicht (EEW) von 840 verwendet. In Beispiel 6 wurde ein Polypropylenoxiddiglycidylether (EW = 330) eingesetzt. Für Beispiel 7 wurde ein Bisphenol-A-diglycidylether (EEW = 188) verwendet.

Das Butadien-Acrylnitril-Copolymerisat wurde in Toluol gelöst, mit dem Epoxidharz versetzt und mehrere Stunden (s. Tabelle I) bei 80°C gerührt bis der Epoxidwert praktisch gleich null war. Anschließend wurde das Reaktionsgemisch mit Ethylenglykolmonobutylether und Isobutanol verdünnt und auf 40°C abgekühlt. Dann wurde Essigsäure zugegeben und innerhalb einer Stunde mit deionisiertem Wasser versetzt.

Danach wurde unter vermindertem Druck Teile der organischen Lösungsmittel und Wasser abdestilliert, und anschließend wurde mit deionisiertem Wasser der in der Tabelle aufgeführte Feststoffgehalt eingestellt.

Die Einzelheiten dieser Versuche sind Tabelle I zu entnehmen.

Tabelle I

| Bsp. | 1 | 2 | 3 | 4 | 5 | 6 | 7 |
|---|---|---|---|---|---|---|---|
| Bu-AN-Copolymerisat [g] | 359.8 | 359.8 | 359.8 | 359.8 | 359.8 | 172.9 | 359.8 |
| Epoxidharz [g] | 23.1 | 46.3 | 52.9 | 61.7 | 70.7 | 27.4 | 9.2 |
| Toluol [g] | 164.1 | 174.0 | 176.9 | 180.6 | 184.5 | 85.8 | 158.1 |
| Ethylenglykolmonobutylether [g] | 62.9 | 68.4 | 68.2 | 62.4 | 59.4 | 41.4 | 86.0 |
| Isobutanol [g] | 97.1 | 116.0 | 119.0 | 112.0 | 111.0 | 73.2 | 125.3 |
| Essigsäure [g] | 5.9 | 6.4 | 6.3 | 5.8 | 5.5 | 3.8 | 5.5 |
| Wasser [ml] | 1463 | 1588 | 1588 | 1452 | 1452 | 960 | 2000 |
| Reaktionszeit [h] | 12 | 10 | 10 | 10 | 11 | 10 | 19 |
| Feststoffgehalt [Gew.%] | 17 | 19 | 17 | 18 | 18 | 18 | 17 |
| Aminzahl [mg KOH/g Festsubstanz] | 65.0 | 61.2 | 60.3 | 58.4 | 57.4 | 59.8 | 59.4 |

Elektrotauchbäder

a) Herstellung des Grundharzes

a1) Ein Gemisch aus 5800 g Hexamethylendiamin, 7250 g Dimerfettsäure und 1400 g Leinölfettsäure wurde langsam auf 195°C erhitzt, wobei das entstehende Wasser (540 g) abdestilliert wurde. Anschließend wurde das Gemisch auf 100°C abgekühlt und mit 5961 g Toluol auf einen Festgehalt von 70 Gew.% verdünnt. Das Produkt hatte eine Aminzahl von 197 mg KOH/g.

a2) In einem zweiten Rührgefäß wurden 10 Äquivalente eines Diglycidylethers auf Basis von Bisphenol A und Epichlorhydrin mit einem Äquivalentgewicht von 485 in einem Lösungsmittelgemisch aus 1039 g Toluol und 1039 g Isobutanol unter Erwärmen gelöst. Die so entstandene Lösung wurde auf 60°C gekühlt und mit 300,4 g Methylethanolamin und 128 g Isobutanol versetzt, wobei die Temperatur innerhalb von 5 min auf 78°C anstieg. Danach wurden 1850 g des nach a1) erhaltenen Kondensationsproduktes zugegeben und die Mischung 2 Stunden auf 80°C erwärmt.

b) Herstellung der Pigmentpaste

Zu 525,8 g des nach a) erhaltenen Bindemittels wurden 168,7 g Butylglykol, 600 g Wasser und 16,5 g Essigsäure gegeben. Dann wurden 800 g Titandioxid, 11 g Ruß und 50 g basisches Bleisilicat zugegeben und die Mischung auf einer Kugelmühle bis zu einer Korngröße kleiner 9 µm gemahlen. Anschließend wurde mit Wasser ein Feststoffgehalt von 47 Gew.% eingestellt.

c) Herstellung des Vernetzers

Eine Mischung aus 1,32 kg Toluol, 0,42 kg Trimethylolpropan und 0,72 kg Bisphenol A wurde bei 60°C so lange gerührt, bis eine homogene Lösung entstanden war. Diese Lösung wurde zu einem auf 60°C erwärmten Gemisch aus 3,45 kg Isophorondiisocyanat, 0,86 kg Toluol und 0,0034 kg Dibutylzinndilaurat gegeben. Das Gemisch wurde 2 h bei einer Temperatur von 60°C gehalten und dann mit 2,0 kg Dibutylamin versetzt, wobei die Zugabegeschwindigkeit so eingestellt wurde, daß die Temperatur des Reaktionsgemisches 80°C nicht überstieg. Anschließend wurden 1,11 kg Toluol zugegeben und noch 1 h bei 80°C gehalten.

d) Herstellung der Elektrotauchbäder

700 g des nach a) erhältlichen Bindemittels und 300 g des Vernetzers c) wurden unter Zusatz von 19 g Essigsäure mit soviel Wasser dispergiert, daß man eine Dispersion mit einem Feststoffgehalt von 31 Gew.% erhielt. Anschließend wurden organische Lösungsmittel als Azeotrop abdestilliert und danach mit Wasser ein Feststoffgehalt von 35 Gew.% eingestellt.

Die so erhaltene Dispersion wurde mit 775 g der nach b) erhältlichen Pigmentpaste und wechselnden Menge der erfindungsgemäßen Dispersion vermischt und mit Wasser auf ein Volumen von 5000 ml aufgefüllt.

Die Elektrotauchbäder wurden 168 Stunden bei 30°C gerührt. An kathodisch geschalteten zinkphosphatierten Prüftafeln aus Stahl wurden innerhalb von 120 Sekunden Lackfilme abgeschieden. Anschließend wurden diese Lackfilme 20 min bei 160°C eingebrannt.

Die Zusammensetzung der Bäder, die Abscheidebedingungen und die Prüfergebnisse sind in Tabelle II aufgelistet.

Tabelle II

| Bad | ET-Disp. [g] | erf.gem. Disp. [g] | Nr. | U [V] | SD [µm] | Erichsen-Ritzprüfung [mm] | RI [Nm] | 480 h SST [mm] | KWT [mm] | Tg1 [°C] | Tg2 [°C] |
|---|---|---|---|---|---|---|---|---|---|---|---|
| 1 | 1836 | - | - | 280 | 23 | 5.3 | < 2,3 | 1.0 | 1.6 | - | 89 |
| 2 | 1653 | 403 | 1 | 280 | 23 | 7.5 | 10,1 | 0.5 | 1.1 | -54 | 85 |
| 3 | 1653 | 372 | 2 | 290 | 25 | 6.4 | 10,1 | 0.7 | 1.3 | -54 | 87 |
| 4 | 1653 | 408 | 3 | 300 | 22 | 6.9 | 13,5 | 0.7 | 1.2 | -53 | 87 |
| 5 | 1791 | 94 | 4 | 260 | 23 | 6.9 | 2,3 | 0.9 | 1.6 | -55 | 88 |
| 6 | 1745 | 187 | 4 | 250 | 20 | 6.6 | 4,5 | 1.1 | 1.1 | -56 | 87 |
| 7 | 1653 | 374 | 4 | 280 | 25 | 8.5 | > 18,1 | 1.1 | 0.9 | -54 | 85 |
| 8 | 1653 | 368 | 5 | 280 | 24 | 8.4 | > 18,1 | 0.7 | 0.9 | -52 | 87 |
| 9 | 1653 | 376 | 6 | 260 | 26 | 7.5 | 11,3 | 1.2 | 1.2 | -52 | 87 |
| 10 | 1653 | 415 | 7 | 280 | 20 | 8.6 | 18,1 | 1.1 | 1.2 | -51 | 87 |

U: Abscheidespannung

SD: Schichtdicke

RI: Reverse Impact, Schlagtiefung; Bestimmung mit einem mandrel impact tester der Fa. Gardner nach ASTM D 2794

480hSST: 480 Stunden Salzsprühtest auf blankem Blech, Unterwanderung in mm nach DIN 50021

KWT: 10 Zyklen Klimawechseltest nach VDA 621-415, Unterwanderung in mm

Tg1, Tg2 Glasübergangstemperaturen der beiden Phasen, gemessen mit DSC nach (Lit.-Stelle nennen)

## Patentansprüche

1. Mittels kathodischer Elektrotauchlackierung mit einem zweiphasigen Überzug beschichtetes Substrat, erhältlich durch Abscheiden einer Mischung, enthaltend

7

A) 10-90 Gew.-% einer wäßrigen kationischen Dispersion eines Amino-Epoxidharzes mit einer Glasübergangstemperatur zwischen 20 und 100°C, einem mittleren Molekulargewicht von 200 bis 20.000 und einer Aminzahl von 30 bis 150,

B) 10-50 Gew.-% einer wäßrigen kationischen Dispersion eines Aminoepoxidharzes, welches erhältlich ist durch Umsetzung eines primäre und/oder sekundäre Aminogruppen enthaltenden Copolymerisates auf Basis von Butadien und Acrylnitril mit einem Epoxidharz mit einem mittleren Molekulargewicht von 140 bis 10.000 und im Mittel 1,5 bis 3 Epoxidgruppen pro Molekül, wobei das Aminoepoxidharz eine Glasübergangstemperatur zwischen -80 und 20°C aufweist, und wobei die den Dispersionen A) und B) zugrundeliegenden Polymeren untereinander unverträglichen sind und

C) 0 bis 50 Gew.-% eines Vernetzers, einer Pigmentpaste, Hilfs- und/oder Zusatzstoffe,

auf einem elektrisch leitfähigen Substrat und nachfolgendem Einbrennen.

**2.** Substrat mit zweiphasigem Überzug nach Anspruch 1, dadurch gekennzeichnet, daß die vernetzte Phase A) eine Glasübergangstemperatur zwischen 50 und 150°C und die Phase B) eine Glasübergangstemperatur zwischen -80 und +20°C aufweist.

**3.** Substrat mit zweiphasigem Überzug nach Anspruch 1 oder 2, dadurch gekennzeichnet, daß die vernetzte Phase A) eine Glastemperatur zwischen 70 und 110°C und die Phase B) eine Glastemperatur zwischen -70 und o°C aufweist.

**4.** Substrat mit zweiphasigem Überzug nach einem der Ansprüche 1 bis 3, dadurch gekennzeichnet, daß die vernetzte Phase A) eine Glastemperatur zwischen 80 und 110°C und die Phase B) eine Glastemperatur zwischen -60 und -10°C aufweist.

**Claims**

**1.** A two-phase cathodic electrocoat obtainable by depositing a mixture comprising

A) 10-90% by weight of an aqueous cationic dispersion of an aminoepoxy resin having a glass transition temperature of from 20 to 100°C, an average molecular weight of from 200 to 20,000 and an amine number of from 30 to 150,

B) 10-50% by weight of an aqueous cationic dispersion of an aminoepoxy resin which is obtainable by reacting a butadiene/ acrylonitrile copolymer which contains primary and/or secondary amino groups with an epoxy resin having an average molecular weight of from 140 to 10,000 and containing on average from 1.5 to 3 epoxy groups per molecule, the aminoepoxy resin having a glass transition temperature from -80 to 20°C and the polymers of dispersions A) and B) being mutually incompatible, and

C) 0-50% by weight of a crosslinking agent, a pigment paste, auxiliaries and/or additives,

on an electrically conductive substrate and then baking.

**2.** A two-phase coat as claimed in claim 1, wherein the crosslinked phase A) has a glass transition temperature of from 50 to 150°C and the phase B) has a glass transition temperature of from -80 to +20°C.

**3.** A two-phase coat as claimed in claim 1 or 2, wherein the crosslinked phase A) has a glass transition temperature of from 70 to 110°C and the phase B) has a glass transition temperature of from -70 to 0°C.

**4.** A two-phase coat as claimed in any of claims 1 to 3, wherein the crosslinked phase A) has a glass transition temperature of from 80 to 110°C and the phase B) has a glass transition temperature of from -60 to -10°C.

**Revendications**

**1.** Support portant un revêtement biphasique appliqué par électrodéposition cathodique en immersion, obtenu par déposition d'un mélange contenant :

10 à 90 % en poids d'une dispersion aqueuse cationique d'une résine amino-époxydique ayant une température de transition vitreuse comprise entre 20 et 100°C, un poids moléculaire moyen de 200 à 20 000 et un indice de 30 à 150,

10 à 50 % en poids d'une dispersion aqueuse cationique d'une résine amino-époxydique obtenue par réaction d'un copolymère à base de butadiène et d'acrylinitrile portant des groupes amino primaires et/ou secondaires avec une résine époxydique ayant un poids moléculaire moyen de 140 à 10 000 et contenant en moyenne de 1,5 à 3 groupes époxyde par molécule, la résine amino-époxydique ayant une température de transition vitreuse comprise entre -80 et 20°C, les polymères de dispersions A) et B) étant incompatibles entre eux, et

0 à 50 % en poids d'un agent réticulant, d'une pâte pigmentaire, de produits auxiliaires et/ou additifs, sur un support conducteur de l'électricité, en faisant suivre d'une cuisson.

2. Support portant un revêtement biphasique selon la revendication 1, caractérisé en ce que la phase A) réticulée a une température de transition vitreuse comprise entre 50 et 150°C et la phase B) réticulée une température de transition vitreuse comprise entre -80 et +20°C.

3. Support portant un revêtement biphasique selon la revendication 1 ou 2, caractérisé en ce que la phase A) réticulée a une température de transition vitreuse comprise entre 70 et 110°C et la phase B) réticulée une température de transition vitreuse comprise entre -70 et 0°C.

4. Support portant un revêtement biphasique selon l'une des revendications 1 à 3, caractérisé en ce que la phase A) réticulée a une température de transition vitreuse comprise entre 80 et 110°C et la phase B) réticulée une température de transition vitreuse comprise entre -60 et -10°C.